# EUROPEAN PATENT SPECIFICATION

(11) **EP 2 220 457 B1**
(45) Date of publication and mention of the grant of the patent: **22.06.2016**
(21) Application number: 08847885.4
(22) Date of filing: 10.11.2008
(51) Int. Cl.: G01C 21/20, G01C 21/36, G01C 21/00, H04M 3/42

(54) **POINTS-OF-INTEREST PANNING ON A DISPLAYED MAP WITH A PERSISTENT SEARCH ON A WIRELESS PHONE**
PANORAMAEINSTELLUNG INTERESSANTER PUNKTE AUF EINER ANGEZEIGTEN KARTE MIT EINER PERSISTENTEN SUCHE AUF EINEM DRAHTLOSEN TELEFON
PANORAMIQUE DE POINTS D'INTÉRÊT SUR UNE CARTE AFFICHÉE AVEC UNE RECHERCHE PERSISTANTE SUR UN TÉLÉPHONE SANS FIL

(30) Priority: 09.11.2007 US 996308 P
(43) Date of publication of application: 25.08.2010
(73) Proprietor: TeleCommunication Systems, Inc., Annapolis, MD 21401 (US)
(72) Inventor: WISTRAND, Eric, Antioch, CA 94509 (US); SEBASTIAN, Kevin, Union City, CA (US); HAHN, John, San francisco, CA 94110 (US); GILL, Regan, Berkeley, CA 94702 (US); TSURUTOME, Kevin, San Francisco, CA 94131 (US); BARCKLAY, Robert, Berkeley, CA 94702 (US)
(74) Representative: Walker, Neville Daniel Alan
(86) International application number: PCT/US2008/012621
(87) International publication number: WO 2009/061501

(56) References cited:
- US-A1- 2004 257 340
- US-A1- 2006 089 792
- US-A1- 2006 229 802
- US-A1- 2007 174 259
- US-A1- 2007 176 796
- US-A1- 2007 233 817

## Description

### BACKGROUND OF THE INVENTION

### Field of the Invention

This invention relates generally to wireless telecommunication. More particularly, it relates to location based services (LBS), and persistent point-of-interest search and display techniques in wireless applications that enable viewing by a user of a wireless device.

### Background of the Related Art

Currently with mobile phones, a user can search for point-of-interest icons based on user selected criterion. The user may view the resultant point-of-interest as icons on a map where the location of an icon is representative of the location (street address) of the corresponding point-of-interest. This map view is however static in that the user cannot simply pan to an adjacent map area and view the points-of-interest of the same criterion.

The user must back out of the map screen showing the point-of-interest they have selected and subsequently query for a point-of-interest of the same criterion yet they must somehow specify that they would like to see point-of-interest for a map area that is contiguous with the preceding mapped region of points-of-interest. Finding the contiguous region is nearly impossible in existing products. Also current products require a user to perform too many steps in order to acquire point-of-interest meeting their criterion in adjacent map area.

When a map is displayed in a wireless device using a conventional application, typically a map is somewhat larger than the size of the display screen it is downloaded and displayed on. However, existing map display applications are a bit cumbersome to use on a wireless device, as they typically do not allow the user to fluidly pan around a map that is being displayed at the time.

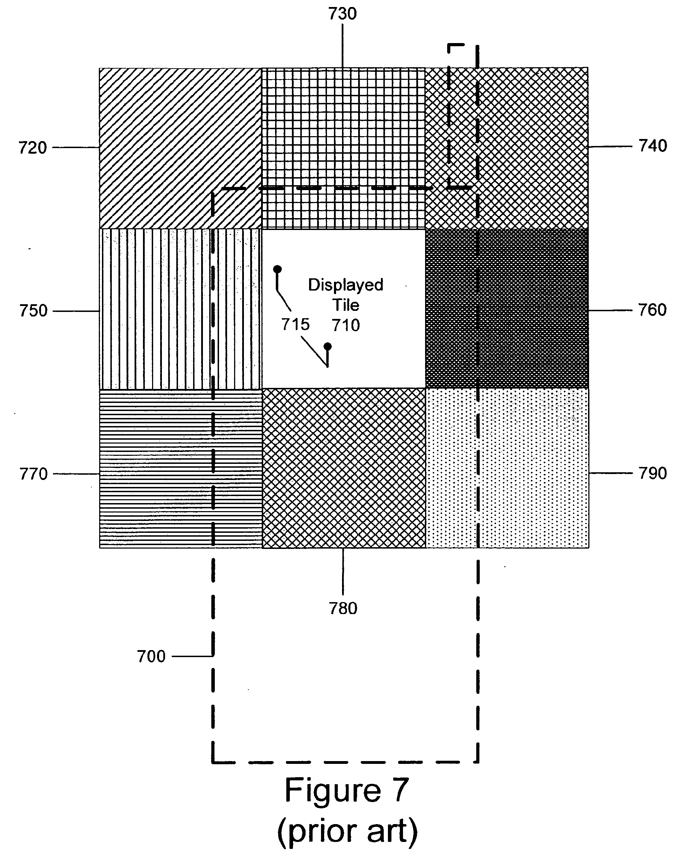

Fig. 7 shows a plurality of tiles that conventionally make up a prior art larger map area. In particular, as shown in Fig. 7, a plurality of tiles **710-790** make up a larger map area. Tile **710** is loaded into memory of a wireless device, such as a cell phone. Upon initial startup of the relevant application, the central tile **710** is loaded first and displayed. The central tile includes various points-of-interest **715.** Points-of-interest **715** can include any of a variety of points-of-interest such as address(es), restaurant(s), mass transit station(s), shopping, hospital(s)s, park(s), etc. A user typically enters a search criteria or selects a menu option criteria on the wireless device **700** to display desired points-of-interest **715.**

Presuming,the user has not yet panning on the wireless device, the displayed tile **710** is generally downloaded or fetched first, followed by tiles **720-790** as the user pans to an edge of displayed tile **710.** When a user pans to the edge of displayed tile **710,** the previously loaded image is typically deleted from memory, and replaced with a new image tile, any of tiles **720-790** depending upon the direction of panning. Unfortunately, conventionally only the initially downloaded central tile **710** is displayed with the user's designated points-of-interest **715.** A user may view map details for surrounding tiles **720-790,** but the points-of-interest **715** from the initially displayed tile **710** are not viewable as a user pans from the displayed tile **710.** When a user pans to any of neighboring tiles **720-790,** those tiles do not continue to contain the user designated point-of - interest **715.**

The user must back out of the map screen showing the points-of-interest **715** they have selected and subsequently query for points-of-interest **715** of the same criterion again, yet they must somehow specify that they would like to see points-of-interest **715** for a map area that is contiguous with the preceding mapped region of points-of-interest **715.** Finding the contiguous region is nearly impossible in existing products. Also current products require a user to perform too many steps in order to acquire points-of-interest **715** meeting their criterion in adjacent map area.

### Prior Art

U.S. Patent Application Pub. No. 2007/0176796 (Bliss et al) teaches a computer-implemented mapping method that displays a first map view of a geographic area on a display of a computing device, receives a voice or key-press zoom command and generates a first zoom box of a predetermined size on the display relative to the first map view in response to the zoom command. A second map view is displayed of a zoomed geographic area corresponding to the zoom box.

U.S. Patent Application Pub. No. 2004/0257340 (Jawerth) teaches a navigable, context-sensitive electronic display. A preferred embodiment comprises providing a cross hairs that consists of objects forming an intersection, each object corresponding to a different geometrical dimension of the display; communicating with an input device that provides signals to control movement of the cross hairs; and in response to signals received from the input device, configuring the cross hairs to point to a region on the display. At least some data displayed on the display has an associated context, and movement of the cross hairs on the display is based at least in part upon that context.

There is a need for panning, on a wireless device that allows for persistent points-of-interest that were originally displayed on a first tile displayed for a user. Point-of-interest criteria specified by a user is used to automatically add a point-of-interest to adjacent contiguous tiles to a tile that is currently being displayed for a user.

### SUMMARY OF THE INVENTION

According to a first aspect of the invention there is provided a system for performing a persistent point-of-interest search, comprising:
a persistent search criteria module, at a mapping server, adapted to identify a search criteria from a first mapping tile request from a particular wireless device and to store said search criteria in association with said particular wireless device; and
characterised by
a mapping tile module, at said mapping server, adapted to identify a neighbouring mapping tile associated with a second mapping tile request from said particular wireless device and to perform a point-of-interest search for said neighbouring mapping tile with said stored search criteria in response to the second mapping tile request, triggered by a panning to an edge of the mapping tile currently displayed on said particular device.

According to another aspect of the invention there is provided a method of performing a persistent point-of-interest search, comprising:
identifying, at a mapping server, a search criteria from a first mapping tile request from a particular wireless device;
storing said search criteria in association with said particular wireless device;
identifying, with said mapping server, a neighbouring mapping tile associated with a second mapping tile request from said particular wireless device; and
characterised in that a mapping tile module, at said mapping server, identifies a neighbouring mapping tile associated with the second mapping tile request from said particular wireless device and performs a point-of-interest search for said neighbouring mapping tile with said stored search criteria in response to the second mapping tile request triggered by a panning means for panning to an edge of the mapping tile currently displayed on said particular wireless device.

According to another aspect of the invention there is provided an apparatus for performing a persistent point-of-interest search, comprising:
means for identifying, at a mapping server, a search criteria from a first mapping tile request from a particular wireless device;
means for storing said search criteria in association with the particular wireless device;
means for identifying, with said mapping server, a neighbouring mapping tile associated with a second mapping tile request from the particular wireless device; and
characterised by
a mapping tile module, at said mapping server, configured to identify a neighbouring mapping tile associated with the second mapping tile request from said particular wireless device and to perform a point-of-interest search for said neighbouring mapping tile with said stored search criteria in response to the second mapping tile request for said neighbouring mapping tile, triggered by a panning means for panning to an edge of the currently displayed mapping tile on said particular wireless device.

### BRIEF DESCRIPTION OF THE DRAWINGS

Fig. 1 shows a system for providing persistent points-of-interest during panning, in accordance with the principles of the present invention.
Fig. 2 shows a detailed view of a mapping server, in accordance with the principles of the present invention.
Figure 3 is a flow chart for a process of retrieving persistent search criteria during panning, in accordance with the principles of the present invention.
Fig. 4 shows an exemplary RasterLayer, in accordance with the principles of the present invention.
Fig. 5 shows an exemplary IconLayer, in accordance with the principles of the present invention.
Fig. 6 shows a plurality of mapping tiles that make up a larger map area, in accordance with the principles of the present invention.
Fig. 7 shows a plurality of tiles that conventionally make up a prior art larger map area.

### DETAILED DESCRIPTION OF ILLUSTRATIVE EMBODIMENTS

The present invention provides persistent point-of-interest display during panning on a wireless device. During an initial request for a tiled map from the wireless device that includes a point-of-interest search criteria, the point-of-interest search criteria is stored for future reference. The point-of-interest search criteria is stored in association with a particular wireless device. During a request for a neighboring tiled map from the same wireless device, the stored point-of-interest search criteria is retrieved and used to indentify a point-of-interest for the neighboring tiled map. The point-of-interest for the neighboring tiled map together with the neighboring tiled map is transmitted to the wireless device.

The present invention has particular applicability for use in wireless devices because of the typically smaller display screens requiring the need for panning.

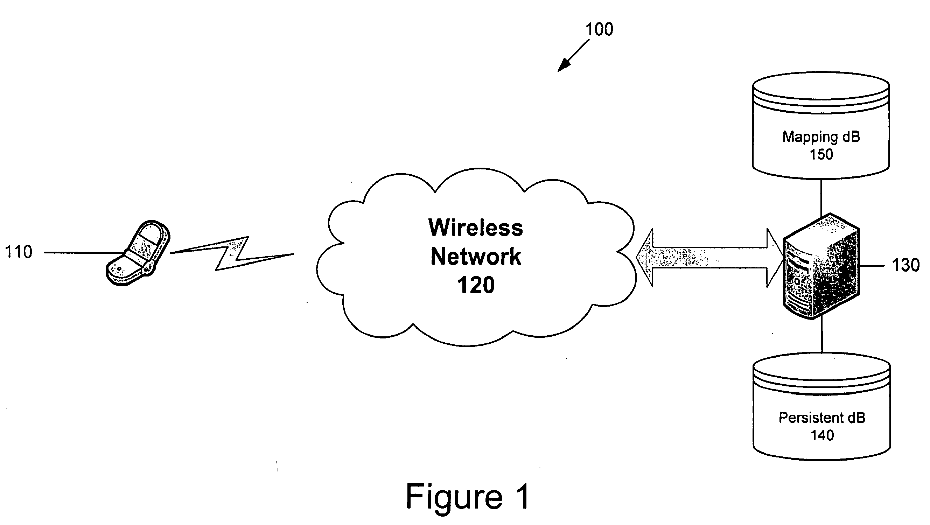

Fig. 1 shows a system for providing persistent points-of-interest during panning, in accordance with the principles of the present invention.

In particular, the system **100** for providing persistent points-of-interest during panning includes a wireless device **110**, and a wireless network **120.** In accordance with the principles disclosed herein, a tiled map retrieval system includes a mapping server **130**, a mapping database **150**, and a persistent database **140**.

Wireless device **110** downloads map tiles and point-of-interest data from a mapping server **130**. Wireless device **110** formulates a request for a mapping tile and point-of-interest data based on any number of search criteria that can include address(es), restaurant(s), mass transit station(s), shopping, hospital(s)s, park(s), etc. The request is transmitted over the wireless network **120** to mapping server **130.** The mapping server **130** formulates a mapping database **150** query from the search criteria provided in the request for a mapping tile from the wireless device **110.** The mapping tile returned from the mapping database **150** is formulated into one or more appropriate data packets and transmitted to the wireless device **110.** The retrieval of a mapping tile and point-of-interest data from a mapping server **130** by a wireless device **110** is well known within the art.

In accordance with the principles disclosed herein, the mapping server **130** further stores the search criteria to be used during subsequent retrieval of neighboring mapping tiles during panning on a wireless device **110.** The search criteria and associated identification of a wireless device (e.g., mobile identification number or MIN) are stored in persistent database **140.**

Panning to an edge of a currently displayed mapping tile triggers wireless device **110** to transmit a request for a neighboring mapping tile. Conventionally, neighboring mapping tiles are not displayed with persistent point-of-interest criteria displayed. However, in accordance with the principles disclosed herein, a request for a neighboring mapping tile automatically triggers mapping server **130** to perform a search in a persistent database **140** for a previously received search criteria that is associated with a particular MIN. The previously stored search criteria retrieved from persistent database **140** is used to add point-of-interest icons related to a retrieved persistent search criteria. The point-of-interest icons together with a neighboring mapping tile are packaged together for transmission to a requesting wireless device **110.**

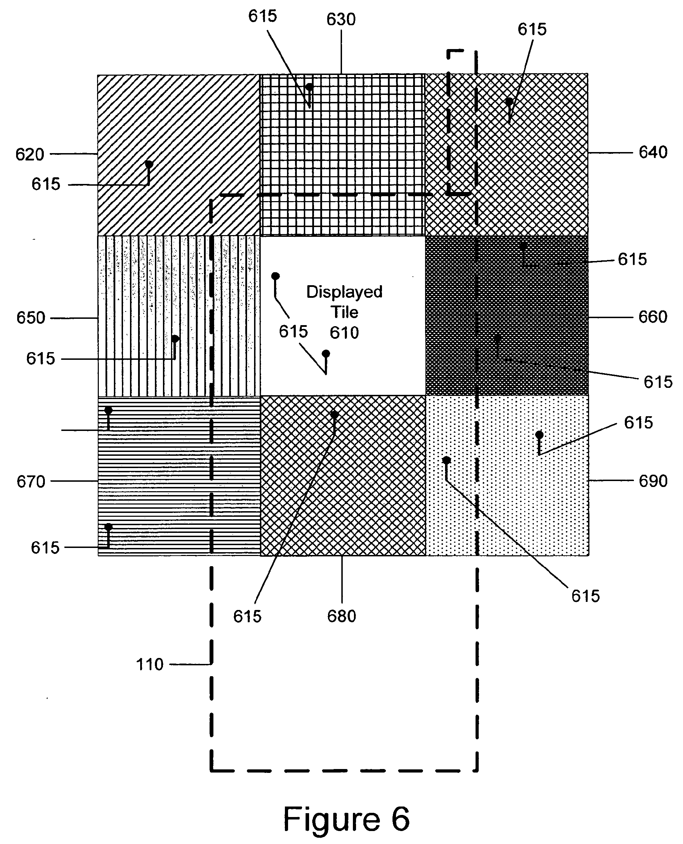

The neighboring mapping tile and its associated icon(s) for point-of-interest, shown in more detail in Figure 6, are transmitted to the wireless device **110.** In this manner, a user must enter search criteria for a point-of-interest only once. During panning operations on the wireless device **110**, point-of-interest icon(s) is/are automatically provided on a neighboring mapping tile without the user having to re-enter search criteria. This saves a user a substantial amount of time from having to re-enter search criteria for each map tile that is displayed on the wireless device **110** during panning.

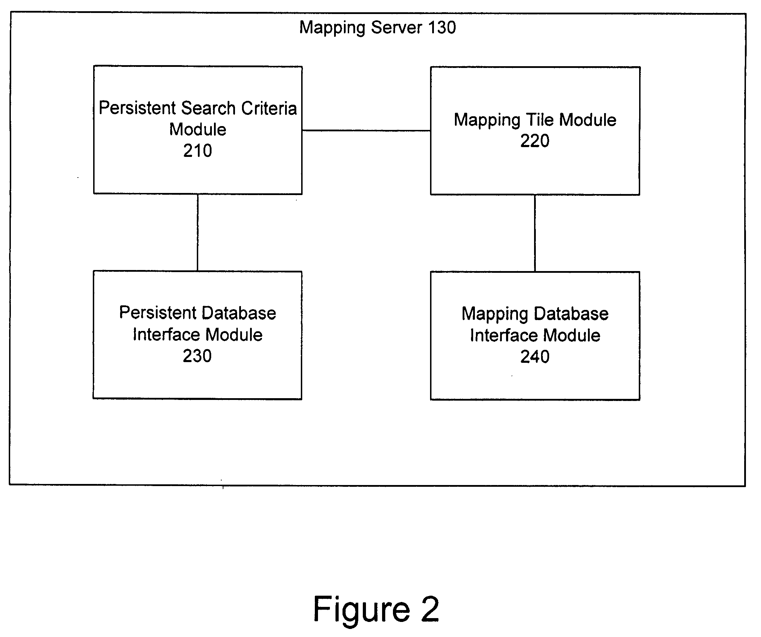

Fig. 2 shows a detailed view of a mapping server, in accordance with the principles of the present invention.

In particular, the mapping server **130** includes a persistent search criteria module **210**, a mapping tile module **220**, a database interface module **230**, and a mapping database interface module **240**.

The persistent search criteria module **210** can communicate with a wireless device **110.** The persistent search criteria module **210** can accept a search criteria from a wireless device **110** and direct the search criteria be stored in association with a particular wireless device **110** for future reference in persistent database 140. Upon the mapping server **130** receiving a request for a mapping tile that is adjacent to a current viewed mapping tile, i.e., during panning, the search criteria module **210** can formulate a request for an appropriate mapping tile and retrieve the previously stored search criteria. The previously stored search criteria can be used to retrieve points-of-interest that match the search criteria from the mapping database **150**.

The mapping tile module **220** can formulate a database query to retrieve appropriate mapping tiles from a mapping database **150**. Moreover, the mapping tile module **220** can formulate a database query to retrieve appropriate points-of-interest from the mapping database **150** based on newly received search criteria and previous search criteria stored in persistent database **140.**

Persistent database interface module **230** can provide an interface between the persistent database **140** and the persistent search criteria module **210.** The persistent database interface module **230** can accept a persistent database **140** query from the persistent search criteria module **210** and provide the appropriate low level data communications to pass the query to the persistent database **140**. Upon the persistent database **140** finding an appropriate match in response to a database query, the persistent database interface module **230** provides the appropriate low level data communications to allow the mapping server **130** to communicate with the persistent database **140.**

The mapping database interface module **240** can provide an interface between the mapping database **150** and the mapping tile module **220.** The mapping database interface module **240** can accept a mapping database **150** query from the mapping database interface module **240** and provide the appropriate low level data communications to pass the query to the mapping database **150.** Upon the mapping database **150** finding an appropriate match in response to a database query, the mapping database interface module **240** provides the appropriate low level data communications to allow the mapping server **130** to communicate with the mapping database **150.**

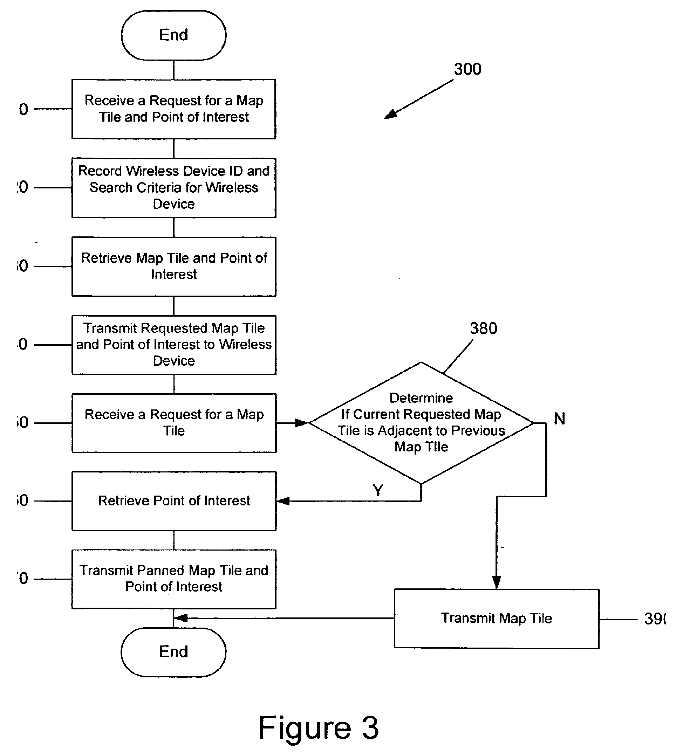

Figure 3 is a flow chart for a process 300 of retrieving persistent search criteria during panning, in accordance with the principles of the present invention.

At step **310**, a request for a mapping tile and at least one search criteria for a point-of-interest can be received by a mapping server **130.** The mapping server **130** can receive one or more data packets that include the request for a mapping tile and the search criteria for a point-of-interest from a wireless device **110.** If the request for a mapping tile and the search criteria for a point-of-interest is received as fragmented packets and/or as out-of-order packets, the persistent search criteria module **210** can re-order and/or reassemble the received packets to reconstruct the request for a mapping tile and search criteria. The mapping server **130** records the identification of the wireless device **110** that initiated a request for a mapping tile and one or more point-of-interest to allow a return of the requested data to the requesting wireless device **110**.

At step **320**, the mapping server **130** can direct storage of the received one or more search criteria for a point-of-interest from step **310** together with an associated wireless device identification, e.g., MIN. Mapping server **130** stores the search criteria and its associated wireless device identification in persistent database **140.**

At step **330**, the mapping server **130** can communicate with mapping database **150** to retrieve a requested map tile and one or more point-of-interest. The mapping server **130** formulates an appropriate database query, as is known within the art, from the request for a mapping tile and search criteria received in step **310**.

At step **340**, the mapping server **130** transmits the mapping tile and icon(s) for point-of-interest, based on a received search criteria, to the wireless device **110** issuing a request for a mapping tile and a request for point-of-interest in step **310**.

At step **350**, the mapping server **130** receives another request for a mapping tile from the same wireless device that issued the request in step **310**. The mapping server **310** can extract identification information, e.g., mobile identification number (MIN) attached to the request for a mapping tile to determine that a same wireless device **110** is again issuing a request for a mapping tile. The mapping server **130** retrieves the requested mapping tile through issuance of a mapping database **150** query. The mapping server **130** can receive the requested mapping tile from the mapping database **150.**

At step **380**, a branch determination is made based on the proximity of the requested mapping tile to the previously transmitted mapping tile. If the mapping server **130** determines that the same wireless device **110** is issuing a request for a mapping tile and if the mapping server **130** determines that the currently requested mapping tile is adjacent, adjacent map tiles are shown in Figure 7, the process **300** branches to step **390**. Otherwise, the process branches to step **360**.

At step **360**, the mapping server **130** retrieves the previously stored search criteria for a point-of-interest, stored in step **320**. The mapping server **130** issues a database query to the persistent database **140**. The mapping server **130** can retrieve previously stored search criteria from persistent database **140** using a wireless device's **110** identification number, e.g., MIN. The mapping server **130** can receive a result of the database query, the result being the persistent search criteria in accordance with the principles disclosed herein. The persistent search criteria retrieved from persistent database **140** can then be used to issue a database query to the mapping database **150** to retrieve icon(s) for point-of-interest that are associated with the mapping tile retrieved in step **350**.

At step **370**, the mapping tile retrieved from mapping server **130** in step **350** and the icon(s) for point-of-interest retrieve from mapping server **130** in step **360** can together be transmitted to a wireless device **110** in response to panning.

At step **390,** the mapping server **130** can simply transmit the mapping tile retrieved in step **350.** The mapping tile is transmitted without any associated point-of-interest in step **390** since process **300** at this point has determined that the currently requested mapping tile is not being made in response to panning.

The invention serves Points of Interest on contiguous map tiles. Then to provide a service by which a client application can retrieve contiguous map tiles by providing the upper left and lower right points of a "bounding" box on the map. This map tile server is referred to herein as the **"MapControl"**.

The MapControl is a reusable widget capable of displaying map, routing, incident, Points of Interest and other forms of data in a generic manner. It also allows a user to pan, zoom and change locations. The control contains an optional Titlebar, an arbitrary number of layers and a framework for dispatching events to each layer.

The mapping framework consists of a MapLayerControl that contains a list of MapLayers. This MapLayerControl descends from a TitleableScreen that provides an optional, configurable Title control. The MapLayerControl also handles double buffering (for devices that do not provide it). It also contains methods for accessing location, viewport and zoom details. It provides a mechanism for subclasses to registered layers and events. Since it is possible for different layers to require different priorities for each event, it allows the registration of a priority for each event in each layer.

The MapLayerControl provides a generic mechanism to render layers of map detail. The MapControl contains MapLayers and functions for accessing the layers. The MapLayerControl provides an interface for classes to be able to access the current viewport, the current center location and zoom level.

The MapLayerControl allows subclasses to register the order that events traverse the layers. When an event occurs the control will find the layer order in its EventPriorityMap, then it will send the event to each layer. If the event is consumed by a layer, it is not passed onto successive layers. If there is no registered order for a given event, the event will traverse through the layers in the order that they were added to the control. MapLayers will have a pointer to a MapLayerControl so that they can query for relevant mapping information (e.g. mapscale, center point, viewport, etc).

MapLayer is superclasses that will contain all MapTiles provide interfaces to get information and act upon it for each tile.

All MapLayers contain the caching logic. MapTiles can be configured to be different sizes according to the expected data size of each tile. The MapLayer superclass will define the onViewportChanged method; this is necessary so that it knows which tiles are no longer relevant and which tiles need to be downloaded. The threshold for triggering a new set of tiles will be determined by its subclasses.

MapTiles are the units that the MapLayer class will manipulate. The size of the each MapTile is determined by the bounding box.

Layer Priorities represent the order in which the events will 'visit' the layers. Each layer evaluates an event and returns its consumed state. If the event is not consumed by a layer (or if it is not consumable at all), the event visits the next layer respectively. The subclass of the MapLayerControl is in charge of establishing the relationships between events and layers. It decides which layers will be added, the order that specific events will visit the layers as well as the mapping between key codes and events.

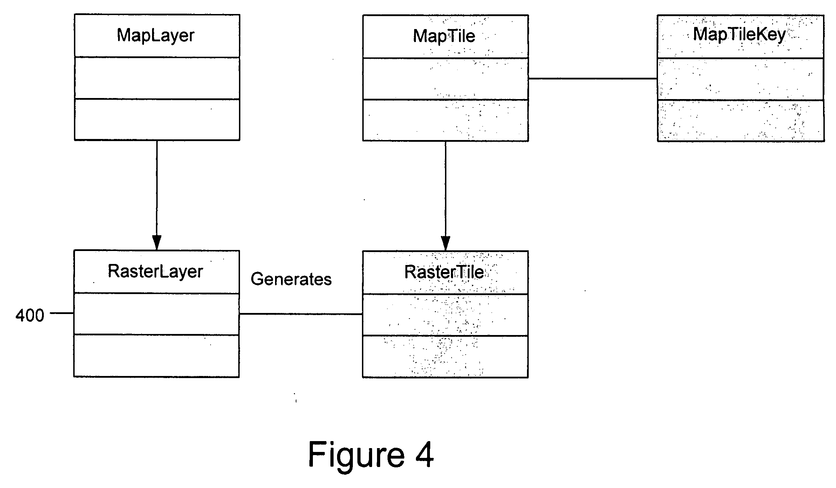

Fig. 4 shows an exemplary RasterLayer, in accordance with the principles of the present invention.

In particular, as shown in Fig. 4, RasterLayer **400 -** The RasterLayer **400** is a Layer representing the Map itself as it is dispensed from the server. No addition items like Points-of-interest or traffic incidents.

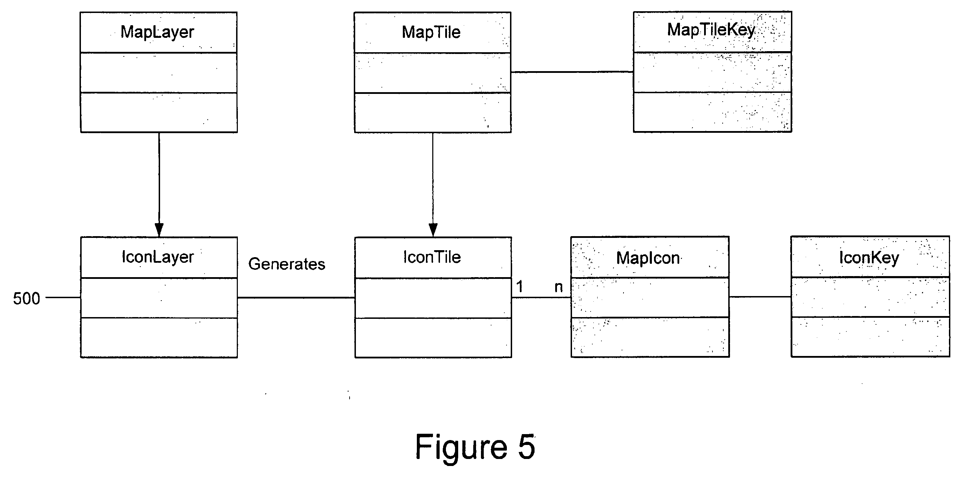

Fig. 5 shows an exemplary IconLayer **500**, in accordance with the principles of the present invention.

In particular, as shown in Fig. 5, IconLayer **500 -** Layer represented by Points-of-interest and their respective location. Maplcons represent Points-of-interest.

Fig. 6 shows a plurality of mapping tiles that make up a larger map area, in accordance with the principles of the present invention.

In particular, as shown in Fig. 6, a plurality of mapping tiles **610-690** make up a larger map area. Mapping tile **610** is loaded into memory of a wireless device **110**, such as a cell phone. Upon initial startup of the relevant application, the central mapping tile **610** is loaded first and displayed. The central mapping tile **610** includes various points-of-interest **615.** Points-of-interest **615** can include an of a variety of points-of-interest that include address(es), restaurant(s), mass transit station(s), shopping, hospital(s)s, park(s), etc. A user typically enters a search criteria or selects a menu option criteria on the wireless device **110** to display desired points-of-interest **615.**

Presuming that the user has not yet panning on the wireless device **110**, the displayed mapping tile **610** is preferably downloaded or fetched first, followed by mapping tiles **620-690** as the user pans to an edge of displayed mapping tile **610.** When a user pans to the edge of displayed mapping tile **610**, the previously loaded mapping tile is deleted from a memory of the wireless device **110**, and replaced with a new mapping tile, any of mapping tiles **720-790** depending upon the direction of panning. In accordance with the principles disclosed herein, panning to any of the mapping tiles **720-790** results in the points-of-interest **615** being persistently and automatically displayed on the mapping tiles **720-790.** In contrast to the prior art, a user of the wireless device **110** need not enter search criteria for subsequent to panning for mapping tiles **720-790**.

While the invention is disclosed herein as being performed by the mapping server **150**, one of ordinary skill in the art would recognize that the features of persistent points-of-interest described herein can be instead by performed by the wireless device **110** itself. In such an alternate embodiment, the mapping server **150** would perform conventional mapping services and the wireless device **110** would identify a request for a neighboring tile, store persistent search criteria and persistently retrieve points-of-interest during panning.

The invention has particular application with wireless application developers that want to display large detailed images on a small display, e.g., the display of maps on a wireless device such as a cell phone or PDA. The invention also has applicability with vendors offer mapping functionality for portable, wireless devices in particular.

While the invention has been described with reference to the exemplary embodiments thereof, those skilled in the art will be able to make various modifications to the described embodiments of the invention without departing from the scope of the claims.

## Claims

1. A system for performing a persistent point-of-interest search, comprising:
a persistent search criteria module, at a mapping server, adapted to identify a search criteria from a first mapping tile request from a particular wireless device and to store said search criteria in association with said particular wireless device; and
**characterised by**
a mapping tile module, at said mapping server, adapted to identify a neighbouring mapping tile associated with a second mapping tile request from said particular wireless device and to perform a point-of-interest search for said neighbouring mapping tile with said stored search criteria in response to the second mapping tile request, triggered by a panning to an edge of the mapping tile currently displayed on said particular device.

2. The system for performing a persistent point-of-interest search according to claim 1, wherein:
said first mapping tile request is from a cellular telephone.

3. The system for performing a persistent point-of-interest search according to claim 1, wherein:
said search criteria is for at least one restaurant.

4. The system for performing a persistent point-of-interest search according to claim 1, wherein:
said search criteria is for at least one form of mass transit.

5. The system for performing a persistent point-of-interest search according to claim 1, wherein:
said persistent search criteria module and said mapping tile module are remote from said particular wireless device.

6. A method of performing a persistent point-of-interest search, comprising:
identifying, at a mapping server, a search criteria from a first mapping tile request from a particular wireless device;
storing said search criteria in association with said particular wireless device;
identifying, with said mapping server, a neighbouring mapping tile associated with a second mapping tile request from said particular wireless device; and
**characterised in that** a mapping tile module, at said mapping server, identifies a neighbouring mapping tile associated with the second mapping tile request from said particular wireless device and performs a point-of-interest search for said neighbouring mapping tile with said stored search criteria in response to the second mapping tile request triggered by a panning means for panning to an edge of the mapping tile currently displayed on said particular wireless device.

7. The method of performing a persistent point-of-interest search according to claim 6, wherein:
said first mapping tile request is from a cellular telephone.

8. The method of performing a persistent point-of-interest search according to claim 6, wherein:
said search criteria is for at least one restaurant.

9. The method of performing a persistent point-of-interest search according to claim 6, wherein:
said search criteria is for at least one form of mass transit.

10. Apparatus for performing a persistent point-of-interest search, comprising:
means for identifying, at a mapping server, a search criteria from a first mapping tile request from a particular wireless device;
means for storing said search criteria in association with the particular wireless device;
means for identifying, with said mapping server, a neighbouring mapping tile associated with a second mapping tile request from the particular wireless device; and
**characterised by**
a mapping tile module, at said mapping server, configured to identify a neighbouring mapping tile associated with the second mapping tile request from said particular wireless device and to perform a point-of-interest search for said neighbouring mapping tile with said stored search criteria in response to the second mapping tile request for said neighbouring mapping tile, triggered by a panning means for panning to an edge of the currently displayed mapping tile on said particular wireless device.

11. The apparatus for performing a persistent point-of-interest search according to claim 10, wherein:
said first mapping tile request is from a cellular telephone.

12. The apparatus for performing a persistent point-of-interest search according to claim 10, wherein:
said wireless device includes a cell phone.

13. The apparatus for fetching a pan-able image for display on a wireless device according to claim 10, wherein:
said search criteria is for at least one restaurant.

14. The apparatus for fetching a pan-able image for display on a wireless device according to claim 10, wherein:
said search criteria is for at least one form of mass transit.

15. The apparatus for fetching a pan-able image for display on a wireless device according to claim 10, wherein:
said means for identifying a search criteria and said means for performing a point-of-interest search are remote from said wireless device.

## Patentansprüche

1. System zum Ausführen einer ständigen Suche nach Punkten von Interesse, das Folgendes umfasst:
ein Modul für ständige Suchkriterien, an einem Mapping-Server, zum Identifizieren eines Suchkriteriums von einer ersten Mapping-Feld-Anforderung von einem bestimmten drahtlosen Gerät und zum Speichern des genannten Suchkriteriums in Verbindung mit dem genannten bestimmten drahtlosen Gerät;
**gekennzeichnet durch**
ein Mapping-Feld-Modul, an dem genannten Mapping-Server, zum Identifizieren eines benachbarten Mapping-Feldes in Verbindung mit einer zweiten Mapping-Feld-Anforderung von dem genannten bestimmten drahtlosen Gerät und zum Ausführen einer Suche nach Punkten von Interesse für das genannte benachbarte Mapping-Feld mit dem genannten gespeicherten Suchkriterium als Reaktion auf die zweite Mapping-Feld-Anforderung, ausgelöst durch Schwenken zu einem Rand des aktuell auf dem genannten bestimmten Gerät angezeigten Mapping-Feldes.

2. System zum Ausführen einer ständigen Suche nach Punkten von Interesse nach Anspruch 1, wobei die genannte erste Mapping-Feld-Anforderung von einem zellulären Telefon kommt.

3. System zum Ausführen einer ständigen Suche nach Punkten von Interesse nach Anspruch 1, wobei das genannte Suchkriterium wenigstens ein Restaurant ist.

4. System zum Ausführen einer ständigen Suche nach Punkten von Interesse nach Anspruch 1, wobei das genannte Suchkriterium wenigstens eine Massentransportform ist.

5. System zum Ausführen einer ständigen Suche nach Punkten von Interesse nach Anspruch 1, wobei das genannte Modul für ständige Suchkriterien und das genannte Mapping-Feld-Modul fern von dem genannten bestimmten drahtlosen Gerät sind.

6. Verfahren zum Ausführen einer ständigen Suche nach Punkten von Interesse, das Folgendes beinhaltet:
Identifizieren, an einem Mapping-Server, eines Suchkriteriums von einer ersten Mapping-Feld-Anforderung von einem bestimmten drahtlosen Gerät;
Speichern des genannten Suchkriteriums in Verbindung mit dem genannten bestimmten drahtlosen Gerät;
Identifizieren, mit dem genannten Mapping-Server, eines benachbarten Mapping-Feldes in Verbindung mit einer zweiten Mapping-Feld-Anforderung von dem genannten bestimmten drahtlosen Gerät; und
**dadurch gekennzeichnet, dass** ein Mapping-Feld-Modul, an dem genannten Mapping-Server, ein benachbartes Mapping-Feld in Verbindung mit der zweiten Mapping-Tile-Anforderung von dem genannten bestimmten drahtlosen Gerät identifiziert und eine Suche nach Punkten von Interesse für das genannte benachbarte Mapping-Feld mit dem genannten gespeicherten Suchkriterium als Reaktion auf die zweite Mapping-Feld-Anforderung durchführt, ausgelöst von einem Schwenkmittel zum Schwenken zu einem Rand des aktuell auf dem genannten bestimmten drahtlosen Gerät angezeigten Mapping-Feldes.

7. Verfahren zum Ausführen einer ständigen Suche nach Punkten von Interesse nach Anspruch 6, wobei die genannte erste Mapping-Feld-Anforderung von einem zellulären Telefon kommt.

8. Verfahren zum Ausführen einer ständigen Suche nach Punkten von Interesse nach Anspruch 6, wobei das genannte Suchkriterium wenigstens ein Restaurant ist.

9. Verfahren zum Ausführen einer ständigen Suche nach Punkten von Interesse nach Anspruch 6, wobei das genannte Suchkriterium wenigstens eine Massentransportform ist.

10. Vorrichtung zum Ausführen einer ständigen Suche nach Punkten von Interesse, die Folgendes umfasst:
Mittel zum Identifizieren, an einem Mapping-Server, eines Suchkriteriums von einer ersten Mapping-Feld-Anforderung von einem bestimmten drahtlosen Gerät;
Mittel zum Speichern des genannten Suchkriteriums in Verbindung mit dem bestimmten drahtlosen Gerät;
Mittel zum Identifizieren, mit dem genannten Mapping-Server, eines benachbarten Mapping-Feldes in Verbindung mit einer zweiten Mapping-Feld-Anforderung von dem bestimmten drahtlosen Gerät; und
**gekennzeichnet durch**
ein Mapping-Feld-Modul, an dem genannten Mapping-Server, konfiguriert zum Identifizieren eines benachbarten Mapping-Feldes in Verbindung mit der zweiten Mapping-Feld-Anforderung von dem genannten bestimmten drahtlosen Gerät und zum Ausführen einer Suche nach Punkten von Interesse für das genannte benachbarte Mapping-Feld mit dem genannten gespeicherten Suchkriterium als Reaktion auf die zweite Mapping-Feld-Anforderung, ausgelöst **durch** ein Schwenkmittel zum Schwenken zu einem Rand des aktuell auf dem bestimmten drahtlosen Gerät angezeigten Mapping-Feldes.

11. Vorrichtung zum Ausführen einer ständigen Suche nach Punkten von Interesse nach Anspruch 10, wobei die genannte erste Mapping-Feld-Anforderung von einem zellulären Telefon kommt.

12. Vorrichtung zum Ausführen einer ständigen Suche nach Punkten von Interesse nach Anspruch 10, wobei das genannte drahtlose Gerät ein zelluläres Telefon beinhaltet.

13. Vorrichtung zum Holen eines Panoramabildes zur Anzeige auf einem drahtlosen Gerät nach Anspruch 10, wobei das genannte Suchkriterium wenigstens ein Restaurant ist.

14. Vorrichtung zum Holen eines Panoramabildes zur Anzeige auf einem drahtlosen Gerät nach Anspruch 10, wobei das genannte Suchkriterium wenigstens eine Massentransportform ist.

15. Vorrichtung zum Holen eines Panoramabildes zur Anzeige auf einem drahtlosen Gerät nach Anspruch 10, wobei das genannte Mittel zum Identifizieren eines Suchkriteriums und das genannte Mittel zum Ausführen einer Suche nach Punkten von Interesse fern von dem genannten drahtlosen Gerät sind.

## Revendications

1. Système conçu pour effectuer une recherche persistante de points d'intérêt comprenant :
un module de critères de recherche persistante, au niveau d'un serveur de pavés cartographiques, adapté pour identifier des critères de recherche en réponse à une première demande de pavés cartographiques émanant d'un dispositif sans fil particulier et pour stocker lesdits critères de recherche en association avec un dispositif sans fil particulier ; et
**caractérisé par**
un module de pavés cartographiques, au niveau dudit serveur de pavés cartographiques, adapté pour identifier un pavé cartographique avoisinant associé à une deuxième demande de pavés cartographiques émanant dudit dispositif sans fil particulier et pour effectuer une recherche de points d'intérêt pour ledit pavé cartographique avoisinant avec lesdits critères de recherche stockés en réponse à la deuxième demande de pavés cartographiques, déclenchée par un panoramique jusqu'à un bord du pavé cartographique couramment affiché sur ledit dispositif particulier.

2. Système conçu pour effectuer une recherche persistante de points d'intérêt selon la revendication 1, dans lequel :
ladite demande de pavés cartographiques est issue d'un téléphone cellulaire.

3. Système conçu pour effectuer une recherche persistante de points d'intérêt selon la revendication 1, dans lequel :
lesdits critères de recherche portent sur au moins un restaurant.

4. Système conçu pour effectuer une recherche persistante de points d'intérêt selon la revendication 1, dans lequel :
lesdits critères de recherche portent sur au moins une forme de transport en commun.

5. Système conçu pour effectuer une recherche persistante de points d'intérêt selon la revendication 1, dans lequel :
ledit module de critères de recherche persistante et ledit module de pavés cartographiques sont situés à distance dudit dispositif sans fil particulier.

6. Procédé conçu pour effectuer une recherche persistante de points d'intérêt comprenant les étapes consistant à :
identifier, au niveau d'un serveur de pavés cartographiques, un critère de recherche en réponse à une première demande de pavés cartographiques émanant d'un dispositif sans fil particulier ;
stocker lesdits critères de recherche en association avec ledit dispositif sans fil particulier ;
identifier, avec ledit serveur de pavés cartographiques, un pavé cartographique avoisinant associé à une deuxième demande de pavés cartographiques émanant d'un dispositif sans fil particulier ; et
**caractérisé en ce qu'**un module de pavés cartographiques, au niveau dudit serveur de pavés cartographiques, identifie un pavé cartographique avoisinant associé à la deuxième demande de pavés cartographiques émanant dudit dispositif sans fil particulier et effectue une recherche de points d'intérêt pour ledit pavé cartographique avoisinant avec lesdits critères de recherche stockés en réponse à la deuxième demande de pavés cartographiques, déclenchée par un moyen panoramique pour effectuer un panoramique jusqu'à un bord du pavé cartographique couramment affiché sur ledit dispositif sans fil particulier.

7. Procédé conçu pour effectuer une recherche persistante de points d'intérêt selon la revendication 6, dans lequel :
ladite demande de pavés cartographiques est issue d'un téléphone cellulaire.

8. Procédé conçu pour effectuer une recherche persistante de points d'intérêt selon la revendication 6, dans lequel :
lesdits critères de recherche portent sur au moins un restaurant.

9. Procédé conçu pour effectuer une recherche persistante de points d'intérêt selon la revendication 6, dans lequel :
lesdits critères de recherche portent sur au moins une forme de transport en commun.

10. Appareil conçu pour effectuer une recherche persistante de points d'intérêt, comprenant :
un moyen d'identification, au niveau d'un serveur de pavés cartographiques, de critères de recherche en réponse à une première demande de pavés cartographiques émanant d'un dispositif sans fil particulier ;
un moyen de stockage desdits critères de recherche en association avec le dispositif sans fil particulier ;
un moyen d'identification, avec ledit serveur de pavés cartographiques, d'un pavé cartographique avoisinant associé à une deuxième demande de pavés cartographiques émanant d'un dispositif sans fil particulier ; et
**caractérisé par**
un module de pavés cartographiques, au niveau dudit serveur de pavés cartographiques, configuré pour identifier un pavé cartographique avoisinant associé à la deuxième demande de pavés cartographiques émanant dudit dispositif sans fil particulier et pour effectuer une recherche de points d'intérêt pour ledit pavé cartographique avoisinant avec lesdits critères de recherche stockés en réponse à la deuxième demande pour ledit pavé cartographique avoisinant, déclenchée par un moyen panoramique pour effectuer un panoramique jusqu'à un bord du pavé cartographique couramment affiché sur ledit dispositif sans fil particulier.

11. Appareil conçu pour effectuer une recherche persistante de points d'intérêt selon la revendication 10, dans lequel :
ladite demande de pavés cartographiques est issue d'un téléphone cellulaire.

12. Appareil conçu pour effectuer une recherche persistante de points d'intérêt selon la revendication 10, dans lequel :
ledit dispositif sans fil comporte un téléphone cellulaire.

13. Appareil conçu pour télécharger une image pouvant faire l'objet d'un panoramique à afficher sur un dispositif sans fil selon la revendication 10, dans lequel :
lesdits critères de recherche portent sur au moins un restaurant.

14. Appareil conçu pour télécharger une image pouvant faire l'objet d'un panoramique à afficher sur un dispositif sans fil selon la revendication 10, dans lequel :
lesdits critères de recherche portent sur au moins une forme de transport en commun.

15. Appareil conçu pour rechercher une image pouvant faire l'objet d'un panoramique à afficher sur un dispositif sans fil selon la revendication 10, dans lequel :
ledit moyen d'identification de critères de recherche et ledit moyen de réalisation d'une recherche de points d'intérêt sont situés à distance dudit module sans fil.
